# EUROPEAN PATENT APPLICATION

(11) **EP 2 455 745 A1**
(43) Date of publication of application: **23.05.2012**
(21) Application number: 11156142.9
(22) Date of filing: 28.02.2011
(51) Int. Cl.: G01N 21/64, G01N 21/94

(54) **Apparatus, and associated method, for detecting contamination of an object**

(30) Priority: 16.11.2010 US 947384
(71) Applicant: Research In Motion Limited, Waterloo, ON N2L 3W8 (CA)
(72) Inventor: Hirsch, Alexander Samson, Rolling Meadows, IL 60008 (US); Deluca, Michael Joseph, Rolling Meadows, IL 60008 (US); Suman, Michael Williams, Rolling Meadows, IL 60008 (US)
(74) Representative: Fennell, Gareth Charles

(57) **Abstract**

An apparatus (36), and an associated method, for a portable electronic device, such as a wireless device, to determine luminescence of an object of interest (38). Ultraviolet A (UVA), or other appropriate, light energy is caused to be generated at a flicker rate. Images of the object of interest are recorded both when the UVA light energy is incident on the object of interest and in the absence of incidence of the UVA light energy on the object of interest. The images are compared, and a determination is made of the luminescence of the object of interest.

## Description

The present disclosure relates generally to a manner by which to detect the luminescence of the object. More particularly, the present disclosure relates to an apparatus, and an associated method, by which to detect the luminescence of the object by illuminating the object with ultra violet A (UVA) wavelength, or other, light energy generated by a light generator positioned at a portable electronic device, such as a wireless device.

Positioning of the light generator at the wireless device, or other portable electronic device, facilitates convenience of use. And, operation is carried out in a manner that permits detection of the luminescence both low-light and well-lighted conditions.

### Background

Cellular, and other analogous, wireless communications systems have undergone dramatic growth in little more than a generation. Decreasing equipment and operational costs together with increasing technological capabilities have provided increased communication capabilities at lowered costs. And, for many, use of cellular communication systems, is the primary manner by which to communicate telephonically.

While early-generation, wireless communication systems provided voice communication services and only limited data communication services, successor-generation communication systems provide for increasingly data-intensive communication services. New-.generation communication systems, for instance, provide for communication of large amounts of data in small periods of time, e.g., permitting communication of data messages to which large documents are attached.

Users typically communicate through use of portable wireless devices, sometimes referred to as mobile stations. Such devices are typically of small dimensions, permitting the devices to be hand-carried and available for use whenever desired as long as the user is positioned within an area encompassed by a network of the cellular communication system. The wireless devices include transceiver circuitry to provide for radio communication, both to receive information and to send information. Some wireless devices provide additional functionality, not only to provide for multi-media communications but also to provide significant processing functionalities. Such wireless devices thereby form multifunctional devices, having multiple functionalities.

Because the wireless devices are often times hand-carried by the user and therefore readily available to the user to perform any of the functions available at the wireless device, the additional functionalities provided to such wireless devices are often times well-appreciated and regularly-utilized by users of the wireless devices. And, while a user often times carries the wireless device primarily for telephonic communications, because of the added functionalities of many of such wireless devices, a wireless devices is regularly also utilized to effectuate any of such additional, provided functionalities.

If additional functionality could be provided to a wireless device, the wireless device would become even more useful to a user as the user would have such additional functionality readily available, available to a user whenever needed.

It is in light of this background information related to wireless devices that the significant improvements of the present disclosure have evolved.

### Brief Description of the Drawings

Figure 1 illustrates a functional block diagram of a communication system having a wireless device of an embodiment of the present disclosure operable therein.

Figure 2 illustrates a representation of a display generated during exemplary operation of an embodiment of the present disclosure.

Figure 3 illustrates a process diagram representative of the process of operation of an embodiment of the present disclosure.

Figure 4 illustrates a method flow diagram representative of the method of operation of an embodiment of the present disclosure.

### Detailed Description

The present disclosure, accordingly, advantageously provides an apparatus, and an associated method, by which to detect the luminescence of an object.

Through operation of an embodiment of the present disclosure, a manner is provided by which to detect the luminescence of the object by illuminating the object with ultraviolet A, or other, light energy generated by a light generator of a portable electronic device, such as a cellular mobile station or other wireless device.

In one aspect of the present disclosure, positioning of the light generator at the wireless device, facilitates convenience of use. As a user of the wireless device typically maintains the wireless device in the user's possession, such as by hand-carriage, carriage in the user's pocket or purse, or the like, the user is likely to have the device readily available, when needed, for use.

In another aspect of the present disclosure, the luminescence of the object is identified in well-lighted conditions and is not limited to use in low-light conditions, unlike conventional UVA detection of object contamination. Conventional detection of luminescence typically necessitates, for visual detection, low-light conditions.

In another aspect of the present disclosure, a wireless device, or other portable electronic device, includes an ultraviolet A, or other, light generator supported at the housing thereof. When powered, the light generator generates light energy that, through appropriate positioning of the electronic device, is directed upon an object of interest. When sopositioned, the light energy generated by the light generator illuminates the object of interest. Through appropriate selection of the late-energy characteristics, e.g., to be of UVA characteristics, the light energy incident on the object of interest luminesces, if the object surface contains phosphors. High levels of luminescence are indicative of phosphors on, or at, the object of interest. As organic matter, such as bacteria, viruses, and bodily fluids typically have high levels of phosphors, significant luminescence is indicative of contamination. Thereby, by illuminating an object and detecting high levels of luminescence, the object is of heightened likelihood of being contaminated.

In another aspect of the present disclosure, the UVA light generator is cycled on and off at a high rate, i.e., the light generator is caused to strobe and defines a flicker pattern, i.e., flicker rate. When the light generator is positioned in proximity to the object of interest such that light energy, when generated, is directed upon the object of interest, the object of interest is illuminated at a rate of illumination corresponding to the flicker pattern.

In another aspect of the present disclosure, the luminescence of the object, or portions of the surface thereof differs depending upon whether the UVA, or other, light energy is directed thereon. A comparison is made of the differences in luminescence, or another appropriate characteristic, of the object with, and without, the UVA light energy directed thereon is made. The differences are quantifiable and representative of the level of phosphors at the object.

In another aspect of the present disclosure, the light generator further comprises a white light generator. The white light generator alternately comprises a discrete light generator, i.e., separate from a UVA light generator or part of a light generator that generates both UVA light energy and white light energy. In this aspect of the present disclosure, a comparison is made of the differences in luminescence, or another appropriate characteristic, of the object with the UVA light energy directed thereon and then with the white light energy directed thereon, absent the UVA light energy. The differences are quantifiable and representative of the level of phosphors at the object. Use of the white light directed on the object facilitates comparison in low-light conditions.

In another aspect of the present disclosure, a video image recorder, e.g., a camera, captures images of the object of interest. Images are recorded of both when the image is illuminated with the light energy of a first light characteristic, and when the object is not illuminated with the light energy of the first light characteristic. Comparisons are made of the images, and differences of a characteristic, e.g., the luminescence, of portions of the images are ascertained. Analysis of the comparison provides a quantitative indication of the luminescence of the obj ect even if such differences are not noticeable by human perception.

In another aspect of the present disclosure, the capturing of the images by the image recorder is synchronized with the strobing at the flicker rate of the light energy generated by the light generator. The image capture is thereby caused to be performed at a rate related to the strobing of the light generator. Multiple images, e.g., successive images, are captured and compared. Comparisons between images in which light energy of the first light characteristic is directed upon the object of interest and in which the light energy of the first light characteristic is absent are made. And, responsive to such comparisons, repeated indications of portions of the object having elevated levels of luminescence are identified. The comparisons are made quickly, i.e., on-the-fly, and identifications of areas of the object having heightened levels of luminescence are correspondingly quickly made. Thereby, a user of the device is able to scan an object to obtain indications of portions of the object having heightened levels of luminescence, potential areas of contamination, are readily identified.

In another aspect of the present disclosure, a display is provided at the wireless device, or other portable electronic device. The display includes a display screen that displays results of comparisons made between images of the object with and without the light energy of a first characteristic directed thereon. In one implementation, actual images of the object are displayed together with annotation that identifies portions of the object that have increased luminescence. When configured in the manner that provides for on-the-fly operation with display of real time images, areas of heightened luminescence of an object that is scanned by a device as a user moves the device across an object are displayed.

When implemented at a wireless device that a user otherwise hand-carries, increased functionality of the device is provided by further providing the user with a mechanism by which to ascertain the luminescence and potentially, contamination of an object.

In these and other aspects, therefore, an apparatus, and an associated, is provided for a portable electronic device. The portable electronic device is positionable proximate to an object surface. A light generator is configured to generate light energy of a first light characteristic upon the object surface at a selected interval. A comparator is configured to compare a characteristic of the object surface with the light energy of the first light characteristic generated by the light generator directed thereon and without the light energy of the first light characteristic directed thereon. A display element is configured to display a result of the comparison made by the comparator. The result indicating a heightened level of the characteristic of the object surface.

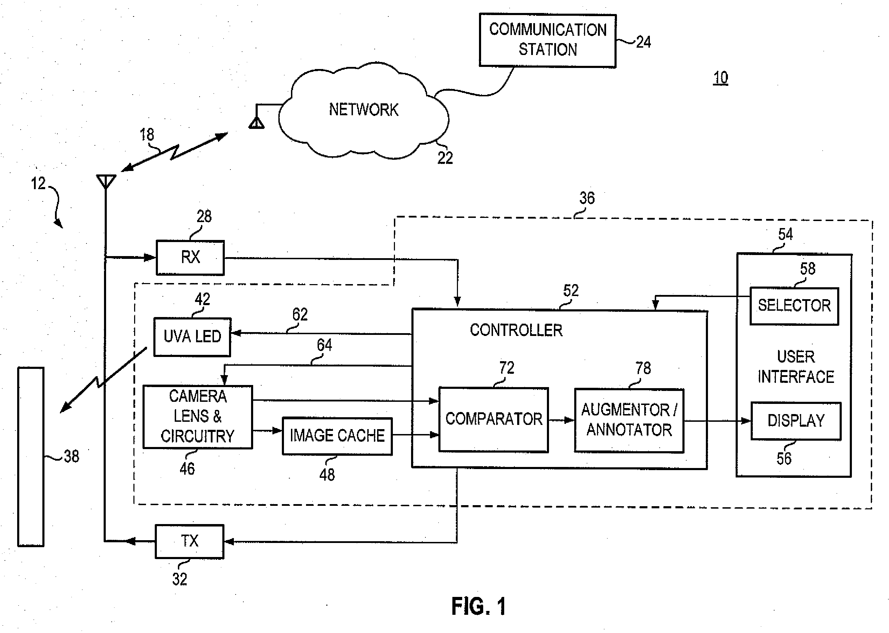

Referring first, therefore, to Figure 1, a communication system, shown generally at 10, provides for communications with a wireless device 12. In the exemplary implementation, the communication system 10 forms a cellular communication system, and the wireless device 12 forms a cellular mobile station. The communication system is, however, more generally representative of any of various radio communication systems. Further, while the exemplary implementation is described with respect to a wireless device 12 operable in a radio communication system, in an alternate implementation, the wireless device 12 is more generally representative of a portable electronic device. Accordingly, while the following description shall be described with respect to its exemplary implementation, it should be understood that in other implementations, the operation of an embodiment of the present disclosure is implemented in other manners.

The wireless device 12 is capable of communicating, by way of radio channels defined upon a radio air interface, represented by the arrow 18, formed between the wireless device and a communication network, here representative, e.g., of a radio access network and a core network. A communication station 24, representative of a communication endpoint, is positioned in communication connectivity with the network 22 and, there through, positionable in communication connectivity with the wireless device 12.

The wireless device 12 includes transceiver circuitry, here represented by a receive (Rx) part 28 and a transmit (Tx) part 32. Two-way communications are provided to permit communications between the wireless device and a communication endpoint, such as the communication station 24 by way of radio channels defined upon the radio air interface 18 8 and the network 22.

As noted previously, wireless devices are often times of small dimension, permitting their hand-carriage by users. Due to this portability, a user regularly carries, or otherwise has ready access to, a wireless device. Functionalities provided by a wireless device are thereby often times readily available to the user.

The wireless device 12, pursuant to an embodiment of the present disclosure, further includes an apparatus 36 of an embodiment of the present disclosure. The apparatus 36 comprises a mechanism that detects luminescence of an object, such as the object 38. Luminescence is caused by shining light of appropriate characteristics upon phosphors-containing objects causes luminescence of the phosphor. As bacteria, germs, and other bio-based substances contain phosphors, such substances luminesce when the light energy is directed thereon. And, the luminescence of the substance is an indication that the object might be contaminated.

The elements of the apparatus 36 are functionally represented, implementable in any desired manner, including hardware elements, software elements, algorithms executable by processing circuitry, and combinations thereof. The apparatus 36 is shown to include a light generator 42, here a UVA (Ultra Violet A) light emitting diode (LED), an image recorder 46, here a camera lens and associated circuitry, an image cache 48, a controller 52, and a user interface 54 having a display element 56 and a selector S8.

In operation, the apparatus causes the UVA LED to generate light energy during selected intervals. When the wireless device 12 is caused to be positioned such that the generated light energy is incident upon the object 38, phosphor-containing substances on the surface of the object are caused to luminesce. The image recorder 42 formed of the camera lens and circuitry is caused to record images of the surface of the object, both when the light energy is incident thereon and at another time, when the light energy is not incident thereon. In the exemplary implementation, the controller 52 controls the periods during which the light generator generates the light energy and when the image recorder records images. The controller causes the light generator to generate light energy at a cyclic, or other rate, which defines a flicker pattern. And, the controller also controls when the image recorder records images. In this implementation, the controller causes the image recorder to record successive images both when the light energy is generated and when the light energy is not generated. Lines 62 and 64 are representative of control lines upon which control signals are generated to control operation of the light generator 42 and image recorder 46, respectively.

A first of the images that is recorded is stored at the image cache 48. And, a second of the images is provided to controller 52, here indicated by way of the line 68, and to a comparator functionality 72 of the controller. A cached image is also provided to the comparator functionality, here indicated by way of the lines 74. The comparator 72 compares images recorded by the image recorder, both with the light-energy generated thereon and without the light-energy generated thereon. Here, such images are provided by way of the lines 68 and 74. The comparator is able to compare and detect differences between the images even in well-lighted conditions in which luminescence is not easily perceptible.

Comparison results, here also together with information relating to the one or more of the recorded images, are provided to an augmenter/annotator 78. The augmenter/annotator augments a recorded image to provide an augmented identification of portions of the image, if any, at which heightened levels of luminescence are detected as a result of comparisons made by the comparator. In one implementation, the augmenter comprises an overlay that overlays an arrow, a circle, or the like upon an image to highlight areas of heightened, detected luminescence.

The augmented display, or other indication the detected, luminescent portion of the object, is provided by the element 78 to the display element 56 of the user interface 54. A user of the wireless device is able to view the display that identifies the portions, if any, of the object 38 that have heightened levels of luminescence. The user is able to determine there from if the object likely contains contamination.

In exemplary operation, a user of the device 12 initiates operation through appropriate selection of a selector 58. Selection is provided to the controller 52. And, the control, in turn, causes the light generator 42 to generate light energy according to a flicker pattern and, synchronized thereto, image recording by the image recorder 46. Captured images are compared by the comparator 72 to determine portions, if any, that contain heightened levels of luminescence. Such areas are highlighted by the augmenter/annotator, and the results are displayed at the display 56.

In the exemplary implementation, the operations performed by the elements of the apparatus 36 are carried out quickly enough to provide for on-the-fly operation, that is, apparent real-time operation. A user of the device is able, for instance, to position the device proximate to the object 38 to cause operation of the apparatus 36 to detect portions of the object that have heightened luminescence levels as the device is moved across the object, such as to scan the object. The display displays the results in an apparent, real-time manner. Thereby, the user is able to select operation of the device to detect luminescence of portions of an obj ect of interest and to have displays generated of the results, even as the user moves the device across a surface of the object of interested.

In a further implementation, the light generator 42 is further configured to generate white light energy. In one implementation, the light generator 42 comprises discrete LED elements, one LED element capable of generating UVA light energy, i.e., light energy of a first characteristic, and a second LED element is capable of generating white light, i.e., light energy of a second characteristic. Alternately, the light generator 42 comprises an LED element capable of generating both light energy of first characteristics and second characteristics, i.e., UVA light energy and white light energy. In exemplary operation of this further implementation, the flicker pattern comprises generation of a period in which UVA light energy is generated followed by a period during which white light energy, absent the UVA light energy, is generated. And, image recording is of an image taken during generation of the UVA light energy (with or without also the white light energy) and of an image recorded during a period in which white light energy, absent the UVA light energy, is generated. On-the-fly operation analogously also is provided in this implementation. This implementation is particularly advantageous in low-light conditions in which an image is illuminated with white light to capture better the object surface, to facilitate improved comparison, and improved display by the display 56.

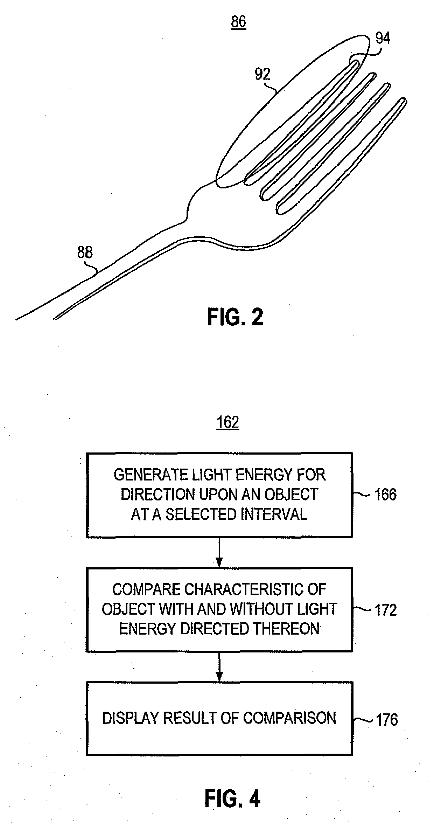

Figure 2 illustrates an exemplary representation 86 representative of an exemplary display generated pursuant to operation of the apparatus 36 shown in Figure 1. The representation 86 is displayable, e.g., at the display 56 of the user interface 54 shown in Figure 1. In this exemplary representation, the object of interest comprises a fork 88. An exemplary operation, user of the device 12 (shown in Figure 1) positions the device in proximity to fork such that the light generated by the light generator of the apparatus 36 is caused to be incident on the fork. The light is generated according to a flicker pattern, and the image recorder records images of the fork, both with, and without, the generated light incident thereon. Comparisons are made and areas of luminescence, if any, are identified. Here, an augmentation is made with a circle 92 positioned about an area of elevated luminescence, which, in the exemplary representation, is located at a prong 94 of the fork. By such indication, a user is able quickly to ascertain areas of the object of interest that are potentially contaminated.

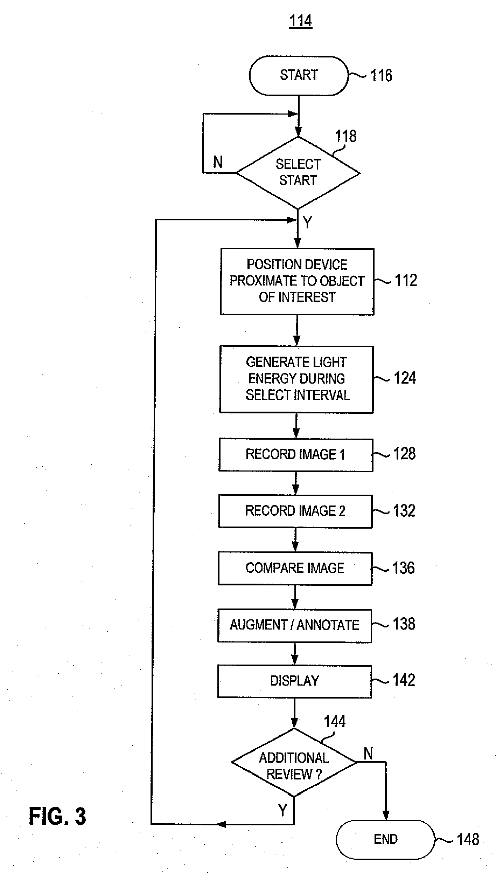

Figure 3 illustrates a process, shown generally at 114, representative of the process of operation of an embodiment of the present disclosure. The process identifies areas of an object of interest that exhibit heightened levels of luminescence, which are, potentially, areas of contamination.

Subsequent to start, indicated by the start block 116, a decision is made, indicated by the decision block 118, as to whether commencement of operation has been selected. If not, the no branch is taken back to the decision block. Otherwise, if commencement of operation has been selected, the yes branch is taken to the block 122. At the block 122, the monitoring and measuring device is positioned in proximity to an object of interest. Then, light energy of the first characteristic is generated, indicated by the block 124. The light energy is generated at a selected flicker rate. And, as indicated by the blocks 128 and 132, images of the object of interest are recorded. The images are recorded in synchronization with the generation of the light energy according to the flicker pattern. That is to say, one of the images is recorded when light energy of the first characteristic is incident on the object of interest, and another images is recorded in the absence of generated light of the first characteristic incident on the object of interest. In one implementation and as noted above, the other image is recorded when white light energy is directed on the object of interest.

Then, and as indicated by the block 136, comparison of the recorded images is made to detect luminescence when the generated light energy is incident on the object of interest. Once the determination has been made, an annotation or augmentation is added, indicated by the block 13 8, to a display image and the resultant display image, and annotation is displayed, indicated by the block 142.

At the decision block 144, determination is made as to whether additional images are to be recorded. If so, the yes branch is taken back to the block 124. Otherwise, the no branch is taken to N block 148, and the process ends.

Figure 4 illustrates a method flow diagram, shown generally at 162, representative of the method of operation of an embodiment of the present disclosure. The method is for a portable electronic device positionable proximate to an object surface to identify luminescence thereof.

First, and as indicated by the block 166, light energy of a first characteristic is generated for direction upon the surface of an object at a selected interval. Then, and as indicated by the block 172, a characteristic of the object surface, with the light energy of the first characteristic directed thereon and without the light energy of the first characteristic directed thereon is compared.

Then, and as indicated by the block 176, a result of the comparison is displayed. The result indicates luminescence of the object surface.

Thereby, a manner is provided by which to increase the functionality of a wireless device, or other portable electronic device. A hand-carried device is provided that permits a user quickly, and conveniently, to detect whether an object of interest is luminescence.

Presently preferred embodiments of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for a portable electronic device, positionable proximate to an object surface, the apparatus comprising:
a light generator configured to generate light energy of a first light characteristic upon the object surface at a selected interval;
a comparator configured to compare a characteristic of the object surface, with the light energy of the first light characteristic generated by the light generator when directed thereon and without the light energy of the first light characteristic directed thereon;
a display element configured to display a result of comparison made by the comparator, the result indicating luminescence of the object surface.

2. The apparatus of claim 1 wherein the light generator comprises an ultraviolet A light generator and wherein the first light characteristic comprises UVA light energy.

3. The apparatus of claim 1 wherein the selected interval at which the luminescent light generator generates the luminescent light energy comprises a plurality defines a flickering pattern.

4. The apparatus of claim 1 further comprising an image recorder configured to record images of the object surface.

5. The apparatus of claim 4 wherein the image recorder is configured to record at least one image of the object surface when the light energy is generated thereon and to record at least one image of the object surface without the light energy generated thereon.

6. The apparatus of claim 4 wherein the comparator is configured to compare the at least one image of the object surface when the light energy is generated thereon and at least one image of the object surface without the light energy generated thereon.

7. The apparatus of claim 6 wherein the comparator is further configured to identify differentiation between the image of the object surface when the light energy is generated thereon and the image of the object surface without the light energy generated thereon.

8. The apparatus of claim 7 wherein the comparator is further configured to identify, responsive to the differentiation between the images, respectively, portions of the object surface containing contamination greater than a threshold amount.

9. The apparatus of claim 1 wherein the display element comprises a video screen configured to display a photographic representation of the object surface.

10. A method for a portable electronic device positionable proximate to an object surface to identify luminescence thereof, the method comprising:
generating light energy of a first light characteristic upon the object surface at selected intervals;
comparing a characteristic of the object surface, with the light energy of the first light characteristic directed thereon and without the light energy of the first light characteristic directed thereon; and
displaying a result of comparison during the comparing, the result indicating contamination of the object surface.

11. The method of claim 10 wherein the generating comprises generating ultraviolet A light and wherein the first light characteristic comprises UVA light energy.

12. The method of claim 10 wherein the generating comprises generating the light energy at a rate defining a flickering pattern.

13. The method of claim 10 further comprising recording images of the object surface.

14. The method of claim 13 wherein the recording comprises recording at least one image of the object surface with the light energy generated thereon and recording at least one image of the object surface without the light energy generated thereon.

15. The method of claim 10 further comprises determining, responsive to comparison made during the comparing, whether contamination on the object surface exceeds a threshold.
